Europäisches Patentamt

European Patent Office

Office européen des brevets

(19)

(11) Publication number: **0 001 496**
A1

(12) **EUROPEAN PATENT APPLICATION**

(21) Application number: 78300438.5

(22) Date of filing: 29.09.78

(51) Int. Cl.²: **F 24 J 3/00, F 25 B 15/00**

(30) Priority: 30.09.77 US 838106

(43) Date of publication of application: 18.04.79
Bulletin 79/8

(84) Designated Contracting States: BE CH DE FR GB NL SE

(71) Applicant: Terry, Lynn Ernest, 22 Suncrest Avenue, Bridgeton, NJ 08302 (US)

(72) Inventor: Terry, Lynn Ernest, 22 Suncrest Avenue, Bridgeton, NJ 08302 (US)

(74) Representative: Greenstreet, Cyril Henry et al, Thames House Millbank, London SW1P 4QF (GB)

(54) **Method and apparatus for the transfer of thermal energy by hydrogen-hydride sorption systems and use for refrigeration and heat pump cycles.**

(57) In improved hydrogen-hydride absorption systems and methods for refrigeration and heat pump cycles, heat is transferred between a heat source and a heat sink at different temperatures for refrigeration or heat pumping by means of a hydrogen-hydride absorption system operating between an upper and a lower pressure and comprising hydrogen and reversibly hydridable materials having different absorption-desorption characteristics for hydrogen, wherein each material is alternately and cyclically exothermically hydrided at one temperature and pressure, heated or cooled to activate it for dehydriding, dehydrided at another temperature and pressure, and cooled or heated to deactivate it for hydriding, hydrogen thereby being transferred between the materials. The system comprises three or more different hydridable materials in a single hydrogen flow circuit, and hydrogen is cyclically and successively transferred between these materials so that the pressure change between the upper and lower working pressures in one direction takes place in two or more stages.

Improved hydrogen-hydride absorption systems and methods
for refrigeration and heat pump cycles

This invention relates to hydrogen-hydride absorption
systems, that is to say systems in which reversibly hydridable
materials are alternately hydrided and dehydrided with
exothermic absorption and endothermic desorption of hydrogen
that is transferred between the materials, and to their
use for the transfer of thermal energy between a heat source
and a heat sink at different temperatures to produce a
refrigeration or heat pump effect or both.

The basic system of this kind comprises two different hydridable materials whose hydrides have different decomposition temperatures at a given working pressure enclosed in a hydrogen containing atmosphere. The use of this system as a heat pump is described in U.S. specification No. 4 044 819.

The first hydride is decomposed by heating to a high temperature above its decomposition temperature with the release of hydrogen, which raises the pressure and is exothermically absorbed in and hydrides the second material that is maintained at a lower intermediate temperature below its decomposition temperature at the raised pressure, the heat released being extracted and delivered to a load or sink. The second hydride is then cooled, thus reducing the pressure, by exposure to a source of heat at a low temperature that is above its decomposition temperature at the lower pressure. The second hydride desorbs hydrogen with absorption of heat, and the hydrogen is exothermically absorbed in and hydrides the first material, with further evolution of heat to the intermediate temperature load. By again heating the first material, the cycle is repeated, the overall effect being the transfer of heat from both the low and high temperature sources to the intermediate temperature load.

According to Netherlands published specification No. 76 19 06 the efficiency of a system of this kind is increased by using a second parallel two-hydride system comprising the same second hydridable material and a third such material having a decomposition temperature between those of the first and second materials. The heat evolved

0001496

in the exothermic hydriding of the first material is used to supply the energy required to dehydride the third material. The second material in each system withdraws heat for dehydriding from the low-temperature heat source and the second and third materials discharge the heat evolved during hydriding to the intermediate temperature heat load.

This arrangement requires the use of two separate hydrogen flow systems and the transfer of heat between the two systems.

The present invention provides a means of producing an efficient refrigeration or heat pump effect in a single hydrogen flow system.

According to the invention a process in which heat is transferred between a heat source and a heat sink at different temperatures by means of a hydrogen-hydride absorption system operating between an upper and a lower pressure and comprising hydrogen and reversibly hydridable materials having different absorption-desorption characteristics for hydrogen, wherein each material is alternately and cyclically exothermically hydrided at one temperature and pressure, heated or cooled to activate it for dehydriding, dehydrided at another temperature and pressure, and cooled or heated to deactivate it for hydriding, hydrogen thereby being transferred between the materials, is characterised by the features that the system comprises three or more different hydridable materials in a single hydrogen flow circuit, and that hydrogen is cyclically and successively transferred between these materials so that the pressure change between the upper and lower working pressures in one direction takes place in two or more stages.

By this process refrigeration and heating can be continuously and efficiently generated directly from the heats of hydrogen desorption and absorption, respectively, of the three or more hydridable material-hydride systems, which will be referred to hereinafter as hydride component systems.

The improved refrigeration is achieved by cascading operation of three or more hydride component systems so as to decrease the hydrogen pressure in stages over a relatively narrow temperature differential between thermal source and thermal sink.   Each cascading between hydride components requires a thermal source at a relatively low temperature and a heat output at a slightly higher temperature.   The entire cycle is completed by raising the last hydride component system to a much higher temperature so that the equilibrium pressure is great enough to hydride the first hydride component system in the process of cascading between hydride components.

The improved heat pump system works in reverse of the refrigeration system, that is by pressure staging between hydride component systems so as to increase the hydrogen pressure.

The invention can also be used to improve the efficiency in heat engine cycles for the production of power by allowing them to operate with lower temperature thermal sinks.   The use of the cascaded heat pump system with the thermally rejected energy of the heat engine cycle allows heat to be output at a higher temperature than the thermal sink, thus providing useful thermal source.

Further advantages of the invention are the flexibility with which the system can be made and designed and its operational efficiency.

The hydridable materials of the hydride component systems must all be different.   These materials may be of the same alloy class, but the specific alloy compositions must be different in order that different equilibrium pressure-temperature relationships exist.   Alloys which may be used in the systems include, but are not limited to, nickel-magnesium alloys, iron-titanium alloys, copper-magnesium alloys, vanadium-silicon alloys, lanthanum-nickel alloys, lanthanum-cobalt alloys, calcium-nickel alloys, and alloys of the generic formula $RT_5$, where R is a rare earth and T is a 3d-transition metal.

The characteristic response of hydridable materials to exposure to hydrogen gas under varying conditions of temperature and pressure, namely the relationship of the equilibrium pressure to the equilibrium temperature over the phase transition from base material to hydrided base material, and the reverse reaction, is expressed by the empirical equation

$$\ln P_{eq} = \frac{-A}{T_{eq}} + B$$

where $P_{eq}$ is the equilibrium pressure of hydrogen in atmospheres, $T_{eq}$ is the corresponding equilibrium temperature in degrees Kelvin, A is a constant with dimensions of temperature, and B is a constant without dimensions. This equation enables the preferred hydridable materials for use in the present invention to be determined. Such materials are those which will supply the necessary pressure differences over the desired operation temperatures of the refrigeration and heat pump modes of operation. The empirical equation is usually a best fit for the equilibrium data of absorption and desorption. Hysteresis is exhibited in that, for the same equilibrium temperature, the equilibrium pressure for absorption is sometimes higher than that for desorption. An inefficiency is also exhibited in that upon hydriding, the equilibrium pressure may increase for the same equilibrium temperature as the equilibrium hydride phase is approached. The reverse is also true in that, upon dehydriding the equilibrium pressure may decrease at the same equilibrium temperature of absorption as the equilibrium base material phase is approached. In the equation, the constant A is related to the heat of absorption by being equal to the heat of formation divided by the universal gas constant. With a phase diagram or a chemical equation describing the phase reaction and the empirical equation, the refrigeration or heat pump system of the present invention can be readily designed.

One advantageous combination of three hydridable materials comprises the alloy $CaNi_5$, the alloy $Ca_{0.7}M_{0.3}Ni_5$, where

M stands for Mischmetal of rare earths, and the alloy $Ca_{0.4}M_{0.6}Ni_5$. The invention will now be described in more detail, with reference to the operation of a hydrogen-hydride system comprising these three materials and with reference to the accompanying drawings, in which::

Figure 1 is a schematic flow diagram illustrating three hydrogen-hydride absorption component systems and associated heat exchangers.

Figure 2 is a pressure-temperature diagram of a three component $CaNi_5$ based system operating in a referigeration mode.

Figure 3 is a pressure-temperature diagram of a three component $CaNi_5$ based system operating so as to achieve a heat pump effect.

Figure 4 is a pressure-temperature diagram of a $CaNi_5$ based system operating as a refrigeration mode where the refrigeration load is the heat rejected in a power cycle.

Figure 5 is a general pressure-temperature diagram showing the manner in which the principles of the invention may be used for improving the efficiency of a power cycle.

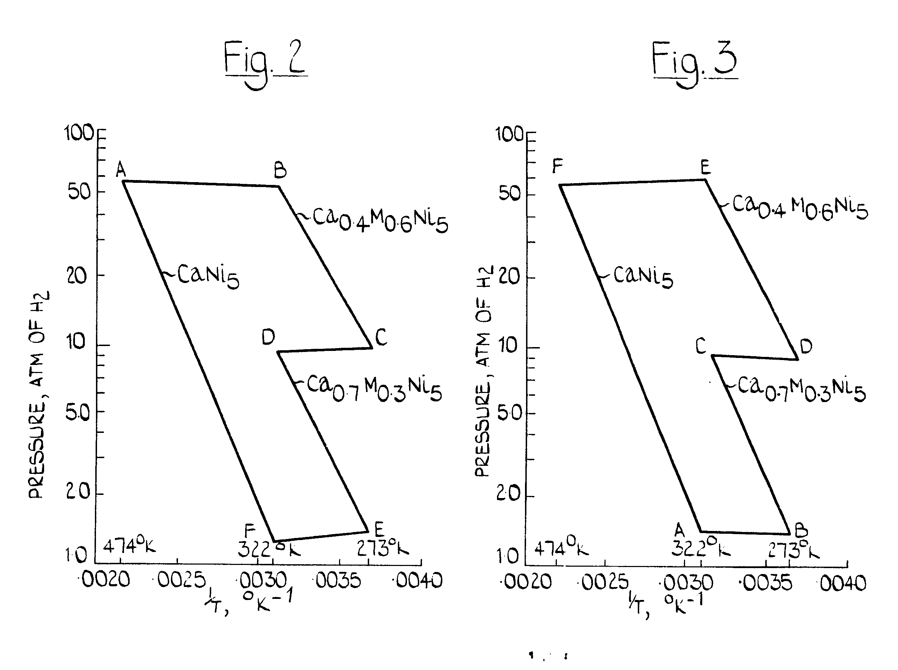

In each of Figures 2 to 5, the ordinates are the logarithm of the pressure in atmospheres, and the abcissae are the reciprocal of the temperature in degrees Kelvin. Certain actual temperature values are also shown for convenience.

Considering first the refrigeration mode of operation, in Figure 2 the lines AF, DE and BC respectively represent the pressure-temperature equilibrium relationships for the $CaNi_5$ hydride, $Ca_{0.7}M_{0.3}Ni_5$ hydride, and the $Ca_{0.4}M_{0.6}Ni_5$ hydride. State A for the $CaNi_5$ hydride is at a temperature of $474^{O}K$ ($T_3$) and 58 atmospheres ($P_3$). As an example of the refrigeration mode of operation, the $CaNi_5$ hydride is dehydrided at the temperature of $474^{O}K$ and 58 atmospheres with a thermal input of 16,000 Joules/g $H_2$. The hydrogen is absorbed on the $Ca_{0.4}M_{0.6}Ni_5$ alloy at state B, a pressure slightly below 58 atmospheres and a temperature of about $322^O$ ($T_1$) which is maintained by removing the heat of absorption of about 11,300 Joules/g $H_2$. State C is where the $Ca_{0.4}M_{0.6}Ni_5$ hydride is dehydrided at 10 atmospheres pressure ($P_4$) and a temperature of $273^O$K ($T_2$). The heat of desorption is about 11,300 Joules/g $H_2$. The desorbed hydrogen is absorbed on the $Ca_{0.7}M_{0.3}Ni_5$ alloy at slightly lower pressure at State D. Thermal energy of 13,600 Joules/g $H_2$ is released at about $322^O$K. The $Ca_{0.7}M_{0.3}Ni_5$ hydride is dehydrided at $273^O$K and 1.5 atmospheres ($P_2$) at State E. The heat of desorption is 13,600 Joules/g $H_2$. The hydrogen is absorbed on the $CaNi_5$ alloy at slightly lower pressure ($P_1$) at State F. Thermal energy of 16,000 Joules/g $H_2$ is released at about $322^O$K. Upon activating the $CaNi_5$ hydride to State A, the cycle is complete.

Figure 3 shows the heat pump mode being operated at the same temperature levels as the refrigeration mode. Beginning at State A, thermal energy of 16,000 Joules/g $H_2$ is supplied to the $CaNi_5$ hydride. Hydrogen is desorbed at a pressure of 1.5 atmospheres and absorbed on the $Ca_{0.7}M_{0.3}Ni_5$ alloy at State B. Thermal energy of 13,600 Joules/g $H_2$ is removed at slightly less than $273^O$K. At State C, the $Ca_{0.7}M_{0.3}Ni_5$ hydride is dehydrided at a pressure of 10 atmospheres as thermal energy of 13,600 Joules/G $H_2$ is supplied at $322^O$K. The desorbed hydrogen is absorbed on the $Ca_{0.4}M_{0.6}Ni_5$ alloy and thermal energy of 11,300 Joules/g $H_2$ at slightly less than $273^O$K is removed. At State E, the $Ca_{0.4}N_{0.6}Ni_5$ hydride is dehydrided by thermal energy of 11,300 Joules/g $H_2$. The pressure is about 58 atmospheres and the temperature is about $322^O$K. The desorbed hydrogen is absorbed on the $CaNi_5$ alloy and thermal energy of 16,000 Joules/g $H_2$ is removed at a temperature slightly less than $474^O$K. This amount of thermal energy is the heat pump effect. Upon cooling the $CaNi_5$ hydride down to State A, the cycle is completed. In each hydrogen transfer stage absorption takes place at a slightly lower pressure than desorption.

The ideal E.U.F. of the $CaNi_5$ based hydride absorption system is 16,000/40,000 = 0.39. The Carnot efficiency of a heat engine cycle operating between $322^{\circ}K$ and $273^{\circ}K$ is 0.15. The Coefficient of Performance of a heat pump operated between $474^{\circ}K$ and $322^{\circ}K$ is 3.1. The maximum E.U.F. possible from a Carnot system would be 0.465. Thus the ideal Energy Utilisation Factor of the $CaNi_5$ system is 84 percent of the Carnot limit.

Figure 4 is a pressure-temperature diagram for a $CaNi_5$ based system in a refrigeration mode. This system operates between the temperatures of $378^{\circ}K$ and $300^{\circ}K$ with heat rejection at $322^{\circ}K$. When this system is operated in conjunction with a heat engine cycle operating between $378^{\circ}K$ and slightly higher than $300^{\circ}K$, the energy rejected could be used as the heat input in the refrigeration mode at $300^{\circ}K$. Then in the refrigeration cycle, heat would be rejected at $322^{\circ}K$. In effect, what was originally described as a refrigeration cycle has now become a heat pump. Since a heat pump cycle is actually a refrigeration cycle, the energy rejected of the refrigeration cycle has become useful, and the refrigeration load is the energy rejected in the power cycle. By allowing the heat engine cycle to reject energy at $300^{\circ}K$ to the refrigeration cycle, the efficiency is increased 25 percent over a temperature of $322^{\circ}K$ for energy rejection. Thus a combined power cycle and the refrigeration cycle allows for increased efficiency in the power cycle and energy rejected at more useful temperature such as $322^{\circ}K$ which could be used for heating a home. At State A, 16,000 Joules/g $H_2$ must be supplied as the heat of absorption. States B, D and F reject heat of 44,400 Joules/g $H_2$. At States C and E, 28,400 Joules/g $H_2$ must be supplied as the heat of absorption. If the energy rejected from the power cycle is considered as one unit of thermal energy which is used as the input to the refrigeration cycle, then 1.56 units of thermal energy are rejected at $322^{\circ}K$ and the thermal input at $378^{\circ}K$ is 0.56 units of thermal energy. The power cycle would operate at 20 percent efficiency and therefore would require 1.20 units of energy at 378$^O$K.    The total input of energy at 378$^O$K would be 1.76 unit.

In the refrigeration mode of operation, an equivalent heat engine cycle is operated between a high temperature thermal source and a low temperature thermal sink by one hydride component.    Refrigeration is then achieved by two or more other hydride component systems.    The higher the temperature difference between thermal source and sink, the more it will become a necessity to use two or more hydride components to approach maximum possible refrigeration output.    The added hydride components allow pressure levels to remain relatively close between component systems when hydriding and dehydriding.    A small pressure difference is necessary for hydriding and dehydriding, but a pressure difference much larger than necessary is wasteful.

In the heat pump mode, small differences in temperature levels between thermal source and sink can be used to advantage by two or more hydride components used in an equivalent heat engine cycle.    In effect several inefficient heat engine equivalent systems are operated between the thermal source and sink to obtain a high temperature thermal output from the hydride component system operating as the mechanical refrigeration equivalent.    Again the use of the several hydride components allows more efficient use of the available energy.

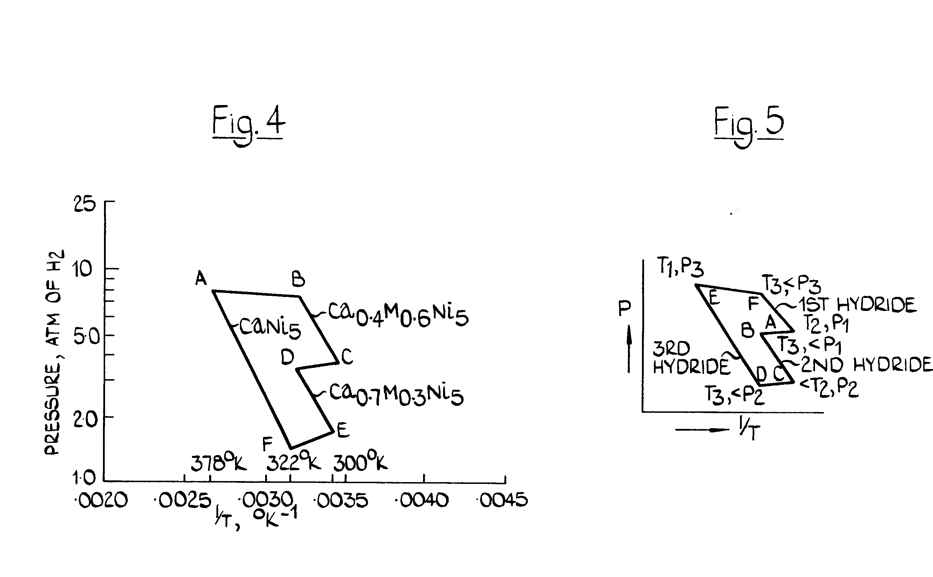

Figure 5 of the drawings shows a system in which the principles of the invention are used for improving the efficiency of a power cycle by combining with the power cycle, a hydrogen absorption system according to the invention including three hydride components.    Assuming a power cycle in which an energy conversion device is present for converting a portion of input thermal energy at temperature $T_1$ to work, while  rejecting the remainder of the thermal energy at temperature $T_2$, a portion of this rejected thermal energy is utilised to dehydride a first hydride material, which first hydride material is in equilibrium at state A, as shown in Figure 5, at temperature $T_2$ and pressure $P_1$.    The thus

desorbed hydrogen gas is absorbed by a second hydridable material at temperature $T_3$, and at a pressure which is slightly less than $P_1$. This state of the second hydridable material is state B on the pressure-temperature diagrams of Figure 5.

The second hydride thus formed is cooled at constant volume to a temperature which is slightly less than $T_2$ at a pressure $P_2$ which is less than $P_1$ (state C). The cooled second hydride, which has been cooled to state C, is then heated by the use of another portion of the thermally rejected energy of the energy conversion device to desorb and supply hydrogen gas to a third hydridable material. A third hydride is thus formed which is saturated with hydrogen gas and is in equilibrium at a temperature of $T_3$ and a pressure which is slightly lower than $P_2$ (as shown at state D in the pressure-temperature diagram). This third hydride material is heated, while retaining the volume thereof constant, to a temperature of $T_1$ and a pressure of $P_3$, and in this manner is made to attain state E of the diagram. Continuing to heat the third hydride material at the temperature $T_1$ and a constant pressure of $P_3$, while releasing the volumetric restriction of confinement on this hydride, allows hydrogen gas to be desorbed from the third hydride, and the hydrogen gas thus desorbed can then be transferred to the first hydridable material to form the first hydride at a temperature $T_3$ and at a pressure slightly less than $P_3$ as signified by state F in Figure 5.

The invention includes apparatus for carrying out the process, which comprises at least three reactors each containing a reversibly hydridable material having different absorption-desorption characteristics for hydrogen, valved conduits connecting the reactors in series in the order of their decomposition temperature at a given working pressure, and connecting the last and first reactor in the series to form a hydrogen flow circuit, means for supplying heat to each reactor, and means for removing heat from each reactor. For each hydride material a set of reactors (otherwise referred to as a reactor system) may be employed, as will be explained in more detail hereinafter.    Each reactor in a given set is connected to the same means for supplying and removing heat.

According to  a   further feature of the invention, each means for supplying heat to or removing it from the reactors is a valved loop connecting a heat exchanger with the reactor and including a circulatory pump for circulating hydrogen from the hydrogen circuit through the reactor and heat exchanger.

By way of example, a preferred form of apparatus and its operation will now be described in more detail.

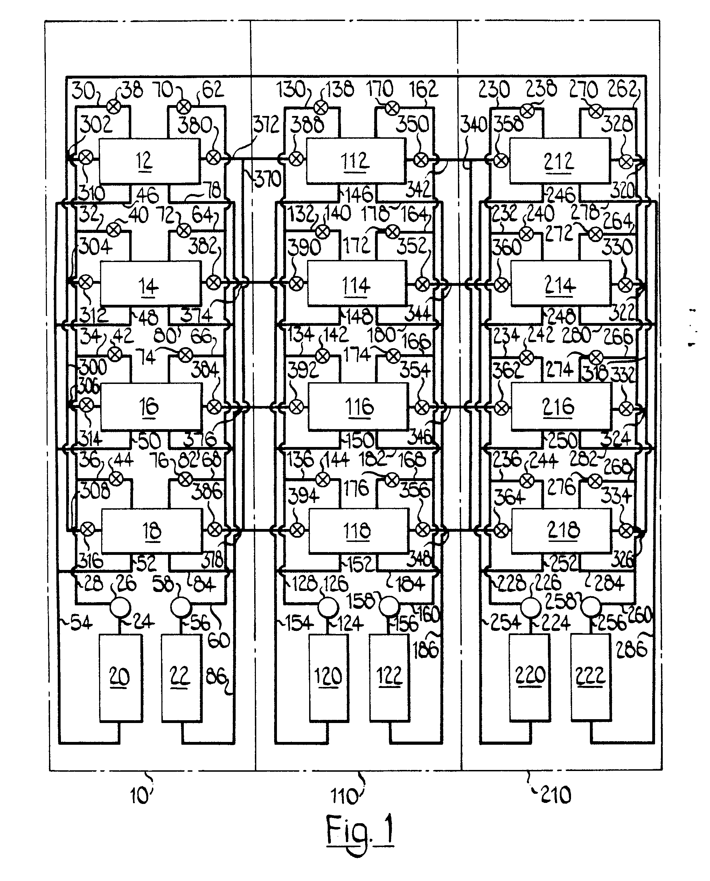

As illustrated in Figure 1 of the drawings, the apparatus includes three identical hydride reactor systems 10, 110, 210 (sometimes hereinafter referred to as  sub-systems), each  containing a different hydriding material.   Each system is made up of four reactors, those in system 10 being numbered 12, 14, 16, 18, and those in systems 110 and 210 being correspondingly numbered 112, etc, and 212, etc.

Heat is removed from or supplied to reactors in systems 10, 110 and 210 by heat exchangers 20 and 22, 120  and 122 and 220 and 222 respectively.

These heat exchangers are advantageously holding tanks for a liquid which will not dissolve hydrogen and whose vapour is inert to the material in the reactor.  The hydrogen gas of the absorption systems is bubbled through the liquid in order to be cooled or heated and passes through the reactors in direct contact with the hydridable material.   This makes possible a very high rate of heat transfer between the hydrogen gas and the liquid in the heat exchanger and between the hydrogen and the material in the reactor.    Since the heat transfer is the rate limiting step for hydriding reactors where heat transfer is by conduction, heat transfer by direct flow over the large surface area of the hydriding alloy and through the liquid will substan-

- 12 -                          0001496

tially decrease cycling time.

The refrigeration mode of operation will first be described. This requires a high temperature thermal input into hydride component system 10 from heat exchanger 20. Hydrogen gas at relatively high temperature is supplied through conduit 24 to circulator pump 26 which compresses it to a pressure above the equilibrium pressure of the hydridable material in system 10. The circulating hydrogen gas is charged to system 10 through manifold 28 and is admitted, in a sequence hereinafter described, to the reactors 12-18 through branch conduits 30, 32, 34 and 36 via valves 38, 40, 42 and 44, respectively. Reactors 12-18 are connected by branch return conduits 46, 48, 50 and 52, respectively, to return manifold 54.

The heat of absorption is removed from system 10 by means of low pressure hydrogen gas circulating through heat exchanger 22. Circulator pump 58 is supplied with hydrogen gas via conduit 56. System 10 is supplied with the circulating hydrogen gas by means of manifold 60 and the hydrogen gas is admitted to reactors 12-18 through branch conduits 62, 64, 66 and 68, respectively, containing valves 70, 72, 74 and 76. Branch return conduits 78, 80, 82 and 84 are connected to return manifold 86.

Hydride component reactor systems 110 and 210 consist of systems equivalent to hydride component system 10 with equivalent components identified by equivalent reference numbers in the 100 and 200 series. Systems 110 and 210 serve as the equivalent of the mechanical refrigeration system and therefore must have heat supplied as the heat of desorption at a relatively low temperature to each of the systems. Heats of absorption are removed at a relatively higher temperature from each of the systems 110 and 210. System 10 serves as the heat engine equivalent with the heat of absorption supplied at a relatively high temperature and with heat rejected at some lower temperature. The heat exchangers 120 and 220 serve to remove the heat of absorption of the hydrogen gas at a temperature intermediate to that of the high temperature input to system 10 and the low temperature refrigeration load, the refrigeration being achieved by supplying the heat of desorption to systems 110 and 210 at a relatively low temperature by heat exchangers 122 and 222 respectively.

In the heat pump mode of operation, systems 110 and 210 serve as the equivalent to the heat engine cycle. Operating within a small temperature differential between thermal source and sink, the heat engine cycle is inefficient. Therefore pressure staging is used between systems 110 and 210 to increase the pressure so that system 10 may be hydrided at a relatively high temperature. System 10 is the equivalent of the mechanical refrigeration system and supplies the heat pump effect. Heat exchanger 122 serves to remove the heat of absorption from system 110 as does heat exchanger 222 in system 210. Heat is supplied as the heat of desorption to system 110 by heat exchanger 120 and to system 210 by heat exchanger 220. The heat pump effect is achieved by removing the heat of absorption from heat exchanger 20 in system 10. Heat of desorption is supplied to system 10 by heat exchanger 22.

Hydrogen is conveyed between reactors of systems 10, 110 and 210 via manifolds 300, 318, 340 and 370. Reactors 12-18 of system 10 are connected to manifold 300 by conduits 302, 304, 306 and 308, respectively, and containing valves 310, 312, 314 and 316. Manifold 318 is connected to reactors 210-218 via conduits 320, 322, 324, and 326, respectively, containing valves 328, 330, 332, and 334, respectively. Reactor systems 110 and 210 are interconnected by manifold 340 which is connected to reactors 112 and 212 by conduit 342 which contains valves 350 and 358. Reactors 114 and 214 are connected by conduit 344 which contains valves 352 and 360. Reactors 116 and 216 are connected by conduit 346 which contains valves 354 and 362. Finally the reactors 118 and 218 of system 110 and 210 are connected to manifold 340 by conduit 348 which contains valves 356 and 364. Reactor systems 10 and 110 are connected by manifold 370. Conduit 372 interconnects manifold 370 to reactors 12 and 112 and contains valves 380 and 388. Reactors 14 and 114 are connected to the manifold 370 by conduit 374 which contains valves 382 and 390. Reactors 16 and 116 are connected by conduit 376 which contains valves 384 and 392. Finally the last two reactors of systems 10 and 110 are connected to manifold 370 by conduit 378 which contains valves 386 and 394.

One manner in which systems 10, 110 and 210 may be operated in order to maintain continuous refrigeration or heat pump effects is by the phase sequence given in Table I.

## Table I

| Reactor | Phase I | Phase II | Phase III | Phase IV |
|---------|---------|----------|-----------|----------|
| 12 | Dehydriding | Deactivating | Hydriding | Activating |
| 14 | Deactivating | Hydriding | Activating | Dehydriding |
| 16 | Hydriding | Activating | Dehydriding | Deactivating |
| 18 | Activating | Dehydriding | Deactivating | Hydriding |
| 112 | Dehydriding | Deactivating | Hydriding | Activating |
| 114 | Deactivating | Hydriding | Activating | Dehydriding |
| 116 | Hydriding | Activating | Dehydriding | Deactivating |
| 118 | Activating | Dehydriding | Deactivating | Hydriding |
| 212 | Hydriding | Activating | Dehydriding | Deactivating |
| 214 | Activating | Dehydriding | Deactivating | Hydriding |
| 216 | Dehydriding | Deactivating | Hydriding | Activating |
| 218 | Deactivating | Hydriding | Activating | Dehydriding |

For purposes of explaining the operation of a continuous refrigeration cycle the hydridable material contained in the reactors of system 10 is assumed to be the alloy $CaNi_5$. The reactors of system 110 are assumed to contain the alloy $Ca_{0.7}M_{0.3}Ni_5$ where M stands for Mischmetal of rare earths and the reactors in system 210 contain the alloy $Ca_{0.4}M_{0.6}Ni_5$. At the outset, the reactor 12 in system 10 will be considered to be in a fully hydrided and activated state, i.e., a hydride of the alloy $CaNi_5$ has been formed and the temperature of the reactor has been heated to $474^{\circ}K$. Reactor 212 of system 210 is in a fully dehydrided and deactivated state, i.e. a hydride of the alloy $Ca_{0.4}M_{0.6}Ni_5$ has not formed, and the temperature of reactor 210 is $322^{O}K$.

At this time, hot hydrogen gas from heat exchanger 20 supplies the heat of desorption to reactor 12. At the commencement of the dehydriding phase, valve 310 is opened to permit hydrogen to flow to reactor 212 to commence hydriding.

The hydrogen pressure supplied by reactor 12 is typically at a pressure of 58 atmospheres and a temperature of $474^{O}K$. To dehydride the $CaNi_5$ hydride requires 16,000 Joules/g $H_2$ of thermal energy.

At the same time as reactor 12 is dehydriding, reactor 212 is hydriding by absorption of hydrogen gas from manifold 318 through open valve 328 in branch conduit 320. The reactor evolves heat of 11,300 Joules/g $H_2$, which is removed by hydrogen gas circulating through heat exchanger 220.

Concurrent to the operations of reactors 12 and 212, reactor 216 is dehydriding, circulating hydrogen gas from heat exchanger 222 supplying the heat of desorption of 11,300 Joules/g $H_2$ at a temperature of $273^{O}K$. The hydrogen pressure in reactor 216 is slightly higher than 10 atmospheres. The hydrogen gas released from reactor 216 is absorbed in the alloy in reactor 116. The evolved heat of reactor 116 is at a temperature of $322^{O}K$ maintained by circulating hydrogen gas from heat exchanger 120.

The heat of absorption of reactor 116 is 13,600 Joules/g $H_2$.

In this same phase of operation reactor 112 is dehydriding and reactor 16 is hydriding. These two reactors improve energy utilisation over a circuit containing only two hydride components. Reactor 112 is dehydriding by supplying to it thermal energy of 13,600 Joules/g $K_2$ at $273^{O}K$. Reactor 16 is hydrided at $322^{O}K$ and releases the heat of absorption of 16,000 Joules/g $H_2$.

The dehydriding occuring in reactor 112 is caused by circulating hydrogen gas from heat exchanger 122 at a temperature of $273^{O}K$. The hydrogen gas released upon desorption is discharged through open valve 388 to manifold 370 at a pressure of 1.5 atmospheres.    Valves 138 and 350 are closed.    Hydrogen from manifold 370 is admitted to reactor 16 through conduit 376 and open valve 384. The heat of absorption is removed by circulating hydrogen gas to reactor 16 from heat exchanger 22 at $322^O$K.

The next phase for the reactors begins when reactors 12, 112 and 216 are fully dehydrided and their deactivation is commenced.    Deactivation requires that the pressure in these reactors be adjusted so that these reactors can be hydrided in the next phase.    Deactivation is effected by bringing the reactors to the hydriding temperature.    This and the simultaneous activation step for reactors 16, 116, and 212 could be done as a heat recovery step by heat exchange between reactors 12 and 16, 112 and 116 and 212 and 216.    Deactivation may also be considered, however, as a part of the hydriding step and activation as part of the dehydriding step.

This next phase is a hydriding phase for reactors 12, 112, and 216 and a dehydriding phase for reactors 16, 116 and 212.    Looking at reactors 16 and 216 first, reactor 16 dehydrides into reactor 216.    The states of the hydrogen gas leaving reactor 16 are the same as when reactor 12 was dehydriding, described above.

Valve 314 is opened to manifold 300 and desorbed hydrogen gas is charged to reactor 216 through manifold 318 and the open valve 332 contained in conduit 324.    The heat of absorption in reactor 216 is removed by heat exchanger 220.

As reactor 212 dehydrides, hydrogen gas therefrom at a pressure of 10 atmospheres  is charged to reactor 112. Thermal energy at $273^O$K is supplied by heat exchanger 222. The heat of absorption at $322^O$K of reactor 112 is removed by the circulating hydrogen gas from heat exchanger 120.

As reactor 116 dehyrides hydrogen gas therefrom is charged to reactor 12.    Thermal energy at $273^O$K is supplied to reactor 116 from heat exchanger 122.    The heat of absorption of reactor 12 is removed through heat exchanger 22.

The final phase for reactors 12, 112, and 216 is the activation phase and for reactors 16, 116 and 212 is the deactivation phase.   The activation phase may again be considered part of the dehydriding phase, which is the next phase in a new cycle for reactors 12, 112, and 216. The deactivation phase may be considered as part of the hydriding phase for reactors 16, 116 and 212.   The hydriding phase is the next phase in a new cycle for reactors 16, 116, and 212.

The four phases of hydriding, activation, dehydriding, and deactivation that have been described for reactors 12, 16, 112, 116, 212 and 216, as the reactors go through a complete cycle for the refrigeration mode, are also characteristic  of the sequential steps for the remaining reactors in systems 10, 110, and 210.   By properly synchronising the operation of the reactors in systems 10, 110, and 210, as shown in Table 1, which shows  the sequential steps in one complete cycle for each reactor, a continuous heat sink from heat exchangers 122 and 222 is available.   Also potentially useful thermal sources for heating at $322^{O}K$ are available from heat exchangers 22,120,  and 220.

In order to more fully explain and clarify the synchronization and sequential operation, Table II shows the status of the various valves used in controlling flows of the hydrogen gases between heat exchangers and reactors.

0001496

## TABLE II

| Phase | Reactor | | | |
|---|---|---|---|---|
| | <u>12</u> | <u>14</u> | <u>16</u> | <u>18</u> |
| Dehydriding/<br>Activating | | | | |
| Valves Opened | 38, 310 | 40, 312 | 42, 314 | 44, 316 |
| Valves Closed | 70, 380 | 72, 382 | 74, 384 | 76, 386 |
| Hydriding/<br>Deactivating | | | | |
| Valves Opened | 70, 380 | 72, 382 | 74, 384 | 76, 386 |
| Valves Closed | 38, 310 | 40, 312 | 42, 314 | 44, 316 |
| | <u>112</u> | <u>114</u> | <u>116</u> | <u>118</u> |
| Dehydriding/<br>Activating | | | | |
| Valves Opened | 170, 388 | 172, 390 | 174, 392 | 176, 394 |
| Valves Closed | 138, 350 | 140, 352 | 142, 354 | 144, 356 |
| Hydriding/<br>Deactivating | | | | |
| Valves Opened | 138, 350 | 140, 352 | 142, 354 | 144, 356 |
| Valves Closed | 170, 388 | 172, 390 | 174, 392 | 176, 394 |
| | <u>212</u> | <u>214</u> | <u>216</u> | <u>218</u> |
| Dehydriding/<br>Activating | | | | |
| Valves Opened | 270, 358 | 272, 360 | 274, 362 | 276, 364 |
| Valves Closed | 238, 328 | 240, 330 | 242, 332 | 244, 334 |
| Hydriding/<br>Deactivating | | | | |
| Valves Opened | 238, 328 | 240, 330 | 242, 332 | 244, 334 |
| Valves Closed | 270, 358 | 272, 360 | 274, 362 | 276, 364 |

From the foregoing description of the method of operation of the refrigeration cycle of the present invention, it will perceived that the systems of this invention provide a highly efficient method of continuously providing a refrigeration heat sink. Heat exchangers 122 and 222 provide refrigeration sinks of 24,900 Joules/g $H_2$ at $273^O$K. Heat exchangers 22, 120, and 220 provide thermal energy of 40,900 Joules/g $H_2$ at $322^O$K. Thermal energy of 16,000 Joules/g $H_2$ must be supplied at $474^O$K to heat exchanger 20. With no account being made for sensible heat effects, the ideal E.U.F. (Energy Utilisation Factor) for these systems is 4.1. The maximum efficiency of a refrigeration absorption cycle operating at the described temperature is, by the Carnot analogy, 1.79. The ideal limit for the $CaNi_5$ alloy systems is 24,900 Joules/16,000 = 1.55 or 86 percent of the Carnot limit.

Operation in the heat pump mode requires the same reactor steps as in Table I though it will be appreciated from the discussion of this mode in connection with Figure 5 that the direction of flow of hydrogen between the reactors of the three systems is reversed. The valve sequence for this mode of operation is shown in Table III. The heat exchangers 22, 120, and 220 of Figure I now serve to supply heat to their respective systems. Heat exchangers 122, 222 serve to remove heat from their respective systems. Heat exchanger 20 removes the heat of absorption in system 10 which is the heat pump effect. System 10 is therefore the mechanical refrigeration equivalent while systems 110 and 210 are the heat engine equivalent.

0001496

## TABLE III

| Phase | Reactor | | | |
|---|---|---|---|---|
| | 12 | 14 | 16 | 18 |
| **Dehydriding/Activating** | | | | |
| Valves Opened | 70, 380 | 72, 383 | 74, 384 | 76, 386 |
| Valves Closed | 38, 310 | 40, 312 | 42, 314 | 44, 316 |
| **Hydriding/Deactivating** | | | | |
| Valves Opened | 38, 310 | 40, 312 | 42, 314 | 44, 316 |
| Valves Closed | 70, 380 | 72, 382 | 74, 384 | 76, 386 |
| | 112 | 114 | 116 | 118 |
| **Dehydriding/Activating** | | | | |
| Valves Opened | 138, 350 | 140, 352 | 142, 354 | 144, 356 |
| Valves Closed | 170, 388 | 172, 390 | 174, 392 | 176, 394 |
| **Hydriding/Deactivating** | | | | |
| Valves Opened | 170, 388 | 172, 390 | 174, 392 | 176, 394 |
| Valves Closed | 138, 350 | 140, 352 | 142, 354 | 144, 356 |
| | 212 | 214 | 216 | 218 |
| **Dehydriding/Activating** | | | | |
| Valves Opened | 238, 328 | 240, 330 | 242, 332 | 244, 334 |
| Valves Closed | 270, 358 | 272, 360 | 274, 362 | 276, 364 |
| **Hydriding/Deactivating** | | | | |
| Valves Opened | 270, 358 | 272, 360 | 274, 362 | 276, 364 |
| Valves Closed | 238, 328 | 240, 330 | 242, 332 | 244, 334 |

- 1 -

0001496

Claims:

1.    A process in which heat is transferred between a
heat source and a heat sink at different temperatures by
means of a hydrogen-hydride absorption system operating
between an upper and a lower pressure and comprising
hydrogen and reversibly hydridable materials having different
absorption-desorption characteristics for hydrogen, wherein
each material is alternately and cyclically exothermically
hydrided at one temperature and pressure, heated or cooled
to activate it for dehydriding, dehydrided at another
temperature and pressure, and cooled or heated to deactivate
it for hydriding, hydrogen thereby being transferred between
the materials, characterised in that the system comprises
three or more different hydridable materials in a single
hydrogen flow circuit, and that hydrogen is cyclically and
successively transferred between these materials so that
the pressure change between the upper and lower working
pressures in one direction takes place in two or more stages.

2.    A process according to claim 1 characterised in that heat is
transferred to or from each material by circulating hydrogen
from the circuit between the material and a heat exchanger.

3.    A process according to claim 1 or claim 2, characterised in that the system comprises three different hydridable
materials each contained in a set of two or more reactors and
that the process is carried out cyclically in four successive
phases, namely a first phase in which concurrently first
material in one reactor of the first set is dehydrided to
form hydrogen that is absorbed by second material in one
reactor of the second set, second material in a second reactor
of the second set is dehydrided to form hydrogen that is
absorbed by third material in   one    reactor of the third
set, and third material in a second reactor of the third
set is dehydrided to form hydrogen that is absorbed by first
material in a second reactor of the first set; a second phase
in which concurrently each of the reactors is heated or cooled
to activate the hydrided materials for dehydriding and to
deactivate the dehydrided materials for hydriding; a third
phase in which concurrently     hydrided material in the first or second reactor of each set is dehydrided to form hydrogen that is absorbed by previously dehydrided material in a first or second reactor of the next set; and a fourth phase in which concurrently each of the reactors is heated or cooled to activate the hydrided materials for dehydriding and to deactivate the dehydrided materials for hydriding.

4. A process according to claim 3, characterised in that material in third and fourth reactors in each set concurrently undergoes the same cycling as that in the first and second reactors, but one step out of phase so that material in the third and fourth reactors of a set is undergoing activation or deactivation while that in the first and second reactors of that set is being hydrided or dehydrided.

5. A process according to claim 3 or claim 4 characterised in that heat is recovered by heat exchange between reactors in a set that are being activated and those that are being deactivated.

6. A process according to any preceding claim, characterised in that the system comprises as hydridable materials the alloys $CaNi_5$, $Ca_{0.7}M_{0.3}Ni_5$ and $Ca_{0.4}M_{0.6}Ni_5$, where M is Mischmetal.

7. A refrigeration process according to any preceding claim, characterised in that heat is extracted by the system from a refrigeration load at the lower working temperature and supplied to the system at the upper working temperature, and evolved from the system at an intermediate temperature.

8. A process according to claim 7, characterised in that the refrigeration load is the energy rejected by a power cycle, whereby the efficiency of the power cycle is increased.

9. A heat pumping process according to any of claims 1 to 6, characterised in that heat is supplied to the system at an intermediate temperature, removed from the system at the lower working temperature and supplied by the system as useful heat at the upper working temperature.

10.     Apparatus   for use in carrying out the heat transfer process according to claim 1, characterised in that it consists of at least three reactors (12, 112, 114) each containing a reversibly hydridable material having different absorption-desorption characteristics for hydrogen, valved conduits (302, 342, 372) connecting the reactors in series in order of the decomposition temperatures of the materials therein at a given working pressure, and also connecting to the first and last reactor in the series, to form a hydrogen flow circuit, means (20, 120, 220) for supplying heat to each reactor and means (22, 122 222) for removing heat from each reactor.

11.     Apparatus according to claim 10, characterised in that each means for supplying or removing heat is a valved (38) loop (24, 28, 54) connecting a heat exchanger (20) with the reactor (12) and including a circulating pump (26) for circulating hydrogen from the hydrogen circuit through the reactor and the heat exchanger.

12.     Apparatus according to claim 11, characterised in that each hydridable material is contained in two or more of a set of reactors, the reactors in different sets are interconnected by valved conduits and all the reactors in each set are connectable to the same pair of heat supply and removal loops.

13.     Apparatus according to any of claims 10 to 12, characterised in that it includes three reactors or sets of reactors respectively containing as hydridable materials the alloys $CaNi_5$, $Ca_{0.7}M_{0.3}Ni_5$ and $Ca_{0.4}M_{0.6}Ni_5$, where M is Mischmetal.

Fig. 1

Fig. 2

Fig. 3

2/3

00001496

## Fig.4

## Fig.5

# EUROPEAN SEARCH REPORT

European Patent Office

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| P | US - A - 4 055 962 (L.T. TERRY) <br> * column 3, lines 63-68 and fig. 1 * <br> --- | 1 | F 24 J 3-00 <br> F 25 B 15-00 |
| P | DE - A - 2 749 565 (INCO EUROPE) <br> * page 6, paragraph 3 * <br> ---- | 6 | |

**TECHNICAL FIELDS SEARCHED (Int.Cl.²)**

F 24 J 1-00
F 24 J 1-04
F 24 J 3-00
F 24 J 3-04
F 25 B 15-00
F 25 B 15-10
F 25 B 17-00
F 25 B 29-00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| Berlin | 08-12-1978 | PIEPER |

EPO Form 1503.1  06.78